Europäisches Patentamt

European Patent Office

Office européen des brevets

(19)

(11) **EP 0 945 974 B1**

(12) **EUROPEAN PATENT SPECIFICATION**

(45) Date of publication and mention
of the grant of the patent:
**21.01.2004 Bulletin 2004/04**

(51) Int Cl.⁷: **H02P 6/18**

(21) Application number: **99103989.2**

(22) Date of filing: **11.03.1999**

(54) **Control apparatus of brushless motor and machine using brushless motor**

Regelvorrichtung für einen bürstenlosen Motor und Maschine mit bürstenlosem Motor

Dispositif de commande pour un moteur sans balai et machine avec un moteur sans balai

(84) Designated Contracting States:
**DE FR GB**

(30) Priority: **23.03.1998 JP 7427798**

(43) Date of publication of application:
**29.09.1999 Bulletin 1999/39**

(73) Proprietor: **Hitachi, Ltd.**
**Chiyoda-ku, Tokyo 101-8010 (JP)**

(72) Inventors:
• **Kawabata, Yukio**
**Hitachinaka-shi, Ibaraki 312-0052 (JP)**

• **Notohara, Yasuo**
**Hitachioota-shi, Ibaraki 313-0025 (JP)**
• **Tahara, Kazuo**
**Hitachi-shi, Ibaraki 316-0032 (JP)**

(74) Representative: **Beetz & Partner Patentanwälte**
**Steinsdorfstrasse 10**
**80538 München (DE)**

(56) References cited:
**EP-A- 0 267 283**          **JP-A- 7 147 793**
**JP-A- 7 255 194**          **JP-A- 8 223 974**
**JP-A- 9 312 993**          **US-A- 5 374 880**
**US-A- 5 436 547**          **US-A- 5 486 743**

**Description**

Background of the Invention:

The present invention relates to a control apparatus of a brushless motor and a machine and apparatus using a brushless motor and particular to a control apparatus for controlling a rotation speed of a brushless motor to a desired rotation speed and using this control apparatus of a brushless motor an air conditioner for carrying an air conditioning in a room by controlling a brushless motor for driving a compressor and a blower, a refrigerator for carrying a refrigeration by controlling a brushless motor for driving a compressor and a blower, and a washing machine for carrying out a washing of clothes by controlling a brushless motor for driving an agitator and a spinning basket.

A brushless motor with which a permanent magnet rotor and a stator winding are combined is employed to an air conditioner, a refrigerator and a washing machine, etc. from an aspect to an easiness in maintenance.

In a drive control of the above stated brushless motor, it is necessary to carry out by relating closely to a magnetic pole position of the rotor and a position of a stator winding which is applied to an electric supply. To detect the magnetic pole position of the rotor, without use of a rotor position detection sensor such as a Hall element etc, a sensorless position detection system is employed using a counter electromotive voltage which is induced in the stator winding according to a mutual operation with the magnetic pole of the rotor, then the magnetic pole position of the rotor is detected.

As a brushless drive apparatus in which the above stated rotor position detection system is employed, for example, there is a brushless motor drive apparatus described in Japanese application patent laid-open publication No. Hei 7-147793. In this brushless motor drive apparatus, a direct current voltage which is outputted from a direct current power supply is supplied to a stator winding of a brushless motor through an inverter circuit. A terminal voltage detection means takes out as a detection voltage by voltage dividing a terminal voltage of the stator winding of the brushless motor and the detection voltage is inputted to a comparison circuit. The comparison circuit output a phase signal by comparing the detection voltage with a standard voltage.

And, under a basis of a pulse width modulation (PWM) signal PS generated from a pulse width modulation (PWM) signal generation circuit, a control apparatus generates a latch timing signal LS according to a latch signal generation circuit to operate a latch operation after a timing in which the above stated PWM signal PS changes from an "on" condition to an "off" condition. Even when the vibration generates in the terminal voltage of the stator winding, without the affect due to the vibration, the phase signal from the comparison circuit 95 is latched in a latch circuit and the position detection signal can be obtained.

In the above stated conventional brushless motor drive apparatus, an output signal from the latch circuit delays with a time from the phase signal which is outputted from the comparison circuit and accordingly the detection position of the rotor magnetic pole which is obtained by the above becomes to get out widely from an actual position of the magnetic pole of the rotor.

As stated in above, when a detection timing of the position detection signal gets out widely, a commutation flow chart (an electric supply) phase of a stator winding current of the brushless motor delays and also a raise-up in current delays, the current leaps up immediately before a change-over of the winding current, due to a burden increase to a drive circuit according to a lowering in an efficiency and a leap-up by the current, an increase of a current capacity of a circuit element is necessary, accordingly it is connected with a cost-up. Or, during the latch timing the noises overlap to the output signal of the comparison circuit from the disturbance noises, since a phase signal which gets out wide the position from an original position detection signal is latched, the brushless motor can not be driven normally, there is a problem in which the brushless motor vibrates or stops.

Further, in the above stated conventional brushless motor drive apparatus, since the latch operation is carried out after the timing in which PWM signal PS changes from the "on" condition to the "off" condition, when a conduction ratio in PWM control is 100 %, there is a problem in which a gate signal of the latch circuit can not be defined or the gate signal in the conduction ratio 100 % of PWM control etc. can not be defined.

US 5 486 743 shows a control apparatus for a brushless motor having a comparison means 17 for outputting fundamental wave signals Vu, Vv, and Vw based on detected terminal voltages of stator winding of the brushless motor. Recognitive wave form signals Ua, Va, Wa are generated based on the fundamental wave signals Vu, Vv, and Vw and a bridge circuit drive signal P1. Because of a signal delay between the bridge driving signal P1 and the terminal voltages induced in the stator winding, the rotor position of the brushless motor can not be determined with high occuracy.

In US 5 374 880 position detection signals D1 - D3 of a brushless motor are derived by comparators 201 - 203 and a serial control signal CNT which is repeatedly activated and inactivated for every 30° is obtained in synchronism with the position detection signals D1 - D3. Conversion control signals L1 - L3 which are repeatedly activated and deactivated for every 180° are generated from the serial control signal CNT. The conversion control signals L1 - L3 are converted into driving signals K1 - K6 which are activated in length of 120° for driving the transistors of a bridge circuit 300. A PWM control of the electric supply signal to the stator winding of the brushless motor is not provided.

In JP08223974 and JP09312993 position signals D (respectively A, B, C) are generated based on the terminal voltages of the stator winding of a brushless motor. Based on the position signals the timing for controlling the electric supply signal through the stator winding is determined.

An object of the present invention is to provide a control apparatus of a brushless motor wherein the accuracy of a magnetic pole position detection of a rotor is improved, a position detection error due to noise can be reduced and an accurate control can be carried out.

A further more object of the present invention is to provide a machine and apparatus, in which a brushless motor controlled as stated above becomes a power source, in particular such as an air conditioner, a refrigerator, and a washing machine.

One feature according to the present invention resides in that in a control apparatus for use in a brushless motor in which, by detecting a position of a magnetic pole of a rotor according to a terminal voltage of a stator winding of the respective phase, an electric supply to the stator winding is controlled, an "on" period and an "off" period of PWM signal is extracted in accordance with a comparison result information signal in which a detection voltage in response to the terminal voltage is compared with a standard voltage.

Another feature according to the present invention resides in that, during the "on" period of PWM signal extracted according to the terminal voltage of the stator winding, the above stated comparison result information signal output as a phase signal as it is and during the "off" period by holding an immediately before comparison result information signal and it output as a phase signal.

Other feature according to the present invention resides in that a position of a rotor is detected in accordance with a pattern of the comparison result information signal of the stator winding of plural phases.

Other feature according to the present invention resides in that an electric supply pattern to the stator winding is determined in accordance with a pattern of the comparison result information signal of the stator winding of plural phases.

Other feature according to the present invention resides in that a period in which a return flow current flows after an electric supply change-over is detected in accordance with a pattern of the comparison result information signal of the stator winding of plural phases.

Other feature according to the present invention resides in that after vanishing of a return flow current after an electric supply change-over, a processing for renewing a phase signal pattern for collating for a position detection is carried out.

Other feature according to the present invention resides in that after an electric supply change-over and a predetermined time laps, a processing for renewing a phase signal pattern for collating-for a position detection is carried out.

Other feature according to the present invention resides in that a rotor position is detected in accordance with a pattern of the comparison result information signal and according to an electric supply phase information stored in a memory or a phase control command from an outside portion, a change-over of an electric supply phase is carried out.

Other feature according to the present invention resides in that in PWM control area a phase control having an operation efficiency importance is carried out and in a high rotation importance area a control for proceeding an electric supply phase is carried out.

A further other feature according to the present invention resides in that an air conditioner, a refrigerator and a washing machine in which the brushless motor controlled by the above stated control apparatus is used a power source.

Brief Description of Drawings:

Fig. 1 is a block diagram showing a brushless motor drive apparatus of one embodiment according to the present invention;

Fig. 2A is a block diagrams showing a gate signal preparation circuit in the brushless motor drive apparatus according to the present invention shown in Fig. 1;

Fig. 2B is a block diagrams showing a gate signal preparation circuit in the brushless motor drive apparatus according to the present invention shown in Fig. 1;

Fig. 2C is a block diagrams showing a gate signal preparation circuit in the brushless motor drive apparatus according to the present invention shown in Fig. 1;

Fig. 3 is a respective signal waveform relating to a position detection circuit in the brushless motor drive apparatus according to the present invention shown in Fig. 1;

Fig. 4 is a processing flow chart in which a control circuit in the brushless motor drive apparatus according to the present invention shown in Fig. 1;

Fig. 5 is a respective signal waveform in PWM (pulse width modulation) control having a conducation ratio less than 100 % relating to the position detection circuit in the brushless motor drive apparatus according to the present invention shown in Fig. 1 practices;

Fig. 6 is a respective signal waveform in PWM control having a conducation ratio of 100 % and PAM (pulse amplitude modulation) control relating to the position detection circuit in the brushless motor drive apparatus according to the present invention shown in Fig. 1;

Fig. 7 is a respective signal waveform view when a period in which a return flow current flows is long after an electric supply current change-over according to the present invention;

Fig. 8 is an operation efficiency characteristic of the brushless motor according to the present invention; and

Fig. 9 is a speed characteristic view of the brushless motor according to the present invention.

Description of the Invention:

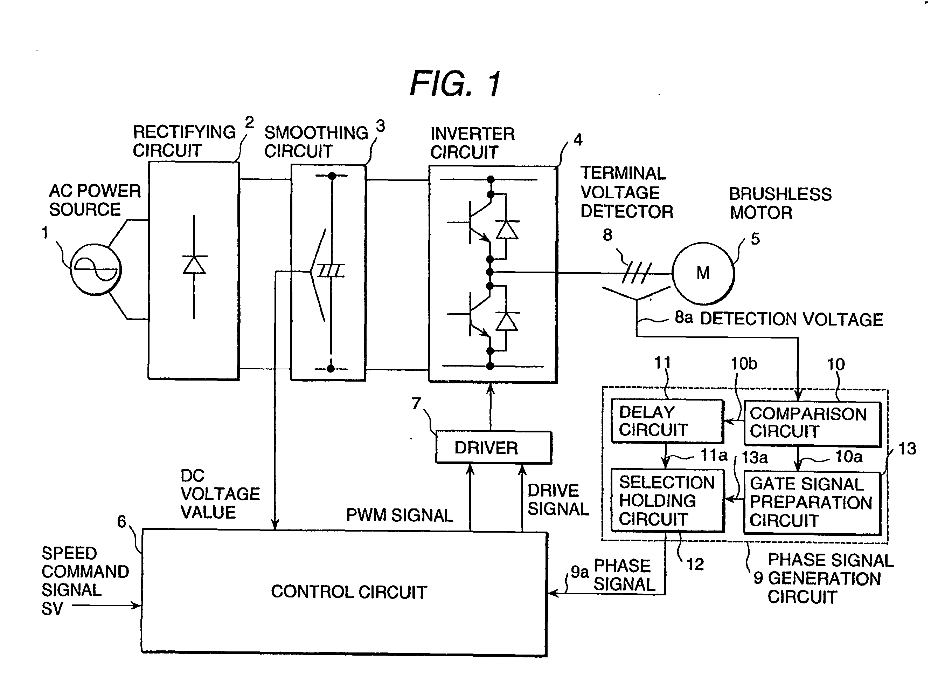

Hereinafter, the embodiments of a control apparatus for used in a brushless motor and a machine and apparatus using the brushless motor which is driven and controlled by the control apparatus will be explained referring to from Fig. 1 to Fig. 9.

Fig. 1 is a block diagram showing a brushless motor drive apparatus of one embodiment according to the present invention. This brushless motor drive apparatus comprises an alternating current (AC) power supply 1, a rectifying circuit 2, a smoothing circuit 3, an inverter circuit 4, a brushless motor 5, a control circuit 6, a driver 7, a terminal voltage detection means 8, and a phase signal generation circuit 9.

The rectifying circuit 2 rectifies an alternating current (AC) from the alternating current (AC) power supply 1, the smoothing circuit 3 smooth the rectifying output voltage and generates a direct current (DC) voltage. The inverter circuit 4 converts the direct current (DC) voltage to an alternating current (AC) voltage having an optimum pulse width and supplies it to a stator winding of the brushless motor 5 and then the brushless motor 5 is rotated. The control circuit 6 (one chip microprocessor or a hybrid IC) carries out a control processing of the above stated brushless motor 5 in response to a speed command signal SV and the driver 7 drives the inverter circuit 4 in accordance with the control circuit 6.

In accordance with a detection voltage 8a which is obtained from the terminal voltage detection means 8 in response to a terminal voltage (= a counter electromotive force) of the respective phase of the stator winding of the brushless motor 5, the phase signal generation circuit 9 generates a phase signal 9a which is a position information of a magnetic pole of a rotor of the brushless motor 5 and supplies it to the above stated control circuit 6.

The above stated phase signal generation circuit 9, in basically, is a circuit means, when PWM signal is an "on" condition, a comparison result information signal 10b from a comparison circuit 10 against to the detection voltage 8a, which corresponds to the terminal voltage of the respective phase of the brushless motor 5, is outputted as the phase signal 9a, and when PWM signal is an "off" condition, by holding the comparison result information signal 10b and output as the phase signal 9a.

The phase signal generation circuit 9 comprises the comparison circuit 10 for comparing the detection voltage 8a which corresponds to the terminal voltage of the respective phase of the stator winding of the brushless motor 5 with a standard voltage, a delay circuit 11 for delaying the comparison result information signal 10b of the respective phase which is outputted from the comparison circuit 10, a selection holding circuit 12 for outputting the generated phase signal 9a according to an output signal 11a from the delay circuit 11 to the above stated control circuit 6, and a gate signal preparation circuit 13 for preparing a gate signal 13a for controlling the operation characteristic of the selection holding circuit 12 in accordance with the comparison result information signal 10a which is outputted from the above stated comparison circuit 10.

The above stated comparison circuit 10 is a circuit in which the detection voltage 8a in response to the terminal voltage of the respective phase of the stator winding of the brushless motor 5 is compared with the standard voltage and output the comparison result information signals 10a and 10b of every the respective phase each. Herein, the standard voltage used in the comparison is a voltage of 1/2 of a neutral point voltage of the stator winding of the brushless motor 5 or the direct current (DC) voltage which is outputted from the smoothing circuit 3.

The above stated gate signal preparation circuit 13 extracts an "on" period or an "off" period of PWM control according to a logical processing in accordance with the comparison result information signal 10a which is outputted from the above stated comparison circuit 10. And in the selection holding circuit 12, the gate signal preparation circuit 13 further has a function for preparing and outputting the gate signal 13a for selecting whether the phase signal which reflects the detection voltage 8a at this time is outputted or by holding a signal level before PWM signal becomes the "off" condition the phase signal is outputted. When the voltage level of the detection voltage 8a is a level in which a general logic circuit is processed, the gate signal 13a can be prepared directly from this detection voltage 8a.

The above stated delay circuit 11 is a functional means for delaying the comparison result information signal 10b of the respective phase which is outputted from the above stated comparison circuit 10 to adjust an operation timing when the signal is selected and held in the above stated selection holding circuit 12. Since this delay circuit 11, in concretely, adjusts a timing of a signal 11a which is inputted to the selection holding circuit 12 and the operation (the gate signal 13a) of the selection holding circuit 12, and taking into a consideration of a circuit constant of the comparison circuit 10 and the gate signal preparation circuit 13 it can omit by adjusting the comparison result information signal 10b and the gate signal 13a.

According to the gate signal 13a which is given from the above stated gate signal preparation circuit 13, the above stated selection holding circuit 12 is a functional means in which it selects to output the respective output signal 11a from the above stated delay circuit 11 output as the respective output signal 11a as the phase signal 9a as it is or the gate signal 13a output as the phase signal 9a by holding the signal level before the gate signal 13b changes.

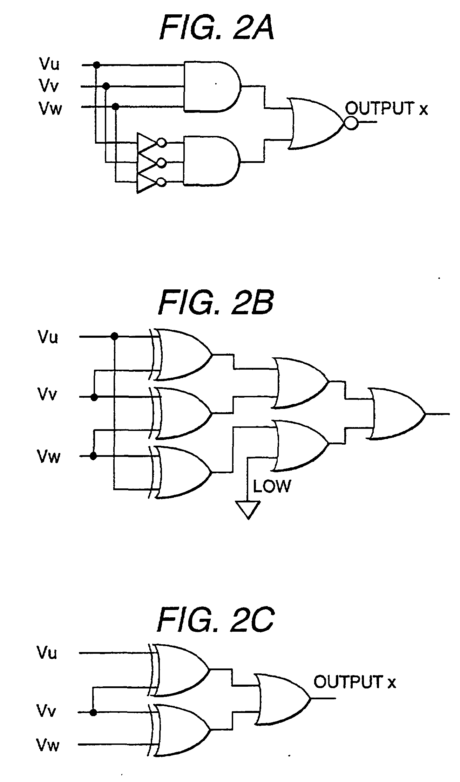

Each of Fig. 2A, Fig. 2B and Fig. 2C is a block diagram in which a concrete construction of the above stated gate signal preparation circuit 13 is illustrated. The illustrated gate signal preparation circuit 13 is constituted by a combination of the logic elements, and the comparison result information signal 10a is inputted as Vu, Vv and Vw, the logic processing result (an output X) of the logic formula (formula 1) is outputted as the gate signal 13a. Accordingly, when the logic circuit satisfies the formula 1, even it is another construction, similar to it can use.

$$\text{output } X = \overline{(Vu \times Vv \times Vw) + (\overline{Vu} \times \overline{Vv} \times \overline{Vw})} \qquad \text{formula 1}$$

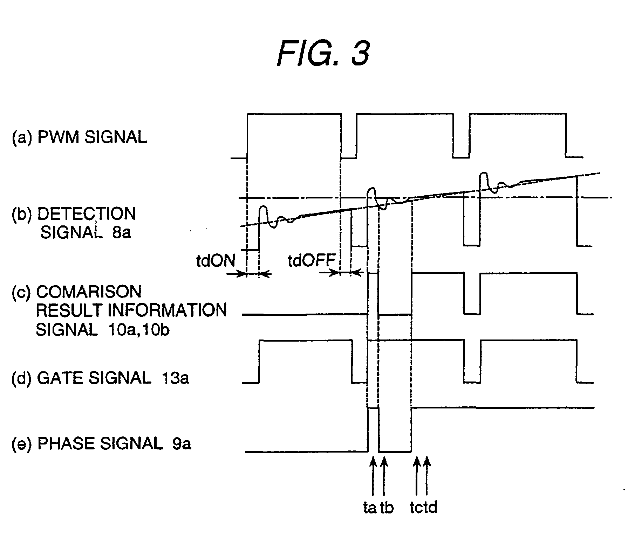

Fig. 3 shows a signal waveform in the above stated control circuit 6 and the phase signal generation circuit 9. In Fig. 3, (a) shows PWM signal which is outputted from the above stated control circuit 6. Against to this, (b) of Fig. 3 is a detection voltage waveform of the terminal voltage of the stator winding of the brushless motor 5 in which according to an affect of the driver 7 and the inverter circuit 4 at a respective raise-up during a delay of tdON and at a respective raise-down during a delay of tdOFF are reflected. (c) of Fig. 3 is the comparison result information signals 10a and 10b which are outputted from the comparison circuit 10. (d) of Fig. 3 is the gate signal 13a which is prepared by the gate signal preparation circuit 13 according to the comparison result information signal 10a.

The selection holding circuit 12, as shown in (e) of Fig. 3, according to the above stated gate signal 13a, when the gate signal 13a is a high level, it reflects the output signal 13a of the delay circuit 11 and when the gate signal 11 is a low level, the phase signal 9a having the waveform in which immediately before the signal level is held is outputted.

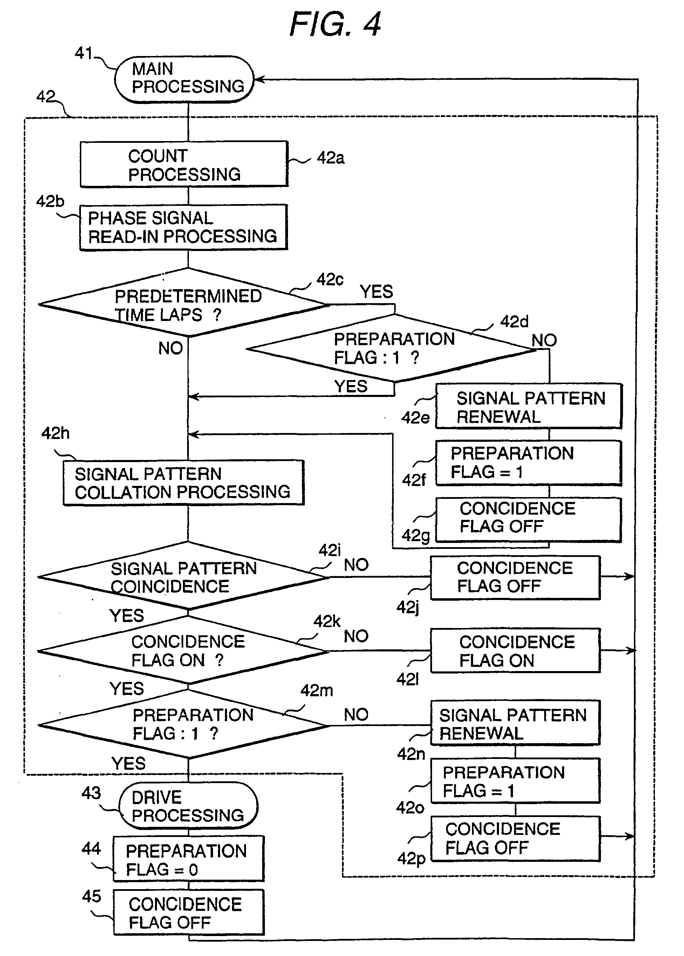

Fig. 4 shows one example of an interior processing of the above stated control circuit 6 to the above stated phase signal 9a. A processing 41 is a main processing of a motor control including a speed control etc. of the brushless motor 5. A processing 42 is a signal processing with respect to a rotor position detection, and a processing 43 is a drive processing for determining a switching operation of the inverter circuit 4 according to the rotor position which is determined by the above stated processing 42, a processing 44 is a clear processing of a preparation flag relating to the drive processing under a basis of the position detection processing, and a processing 45 is a clear processing of a coincidence flag which judges two times coincidence of a phase signal pattern. Herein, the drive processing of the processing 43 is a processing in which after a predetermined time laps which is adjusted by the phase correction to enable to be the electric supply change-over.

The above stated processing 42 is a processing in which by reading periodically the above stated phase signal 9a and under basis this phase single 9a the rotor position is detected (determined). In the detection of the position of this rotor, since the phase signal 9a presents a predetermined signal pattern, a pattern of the phase signal 9a is carried out by collating the predetermined signal pattern.

A processing 42a is a count processing to manage the signal processing relating to the rotor position detection in which how times processing are carried out during the electric angle 30 degree, during the electric angle 60 degree, during the electric angle 120 degree, during the electric angle 360, and during the mechanical angle 360 degree, etc.. Further, the processing 42a is a count processing in which after the laps of a predetermined time the management can carry out.

A processing 42b is a read-in processing for reading in the phase signal 9a of the respective phase. In this time, to know a timing in which the phase signal 9a has read in, the output of the signal such as the high level or the low level from the control circuit 6 is effective to confirm the operation of the control apparatus.

A processing 42c is a processing in which after the electric supply change-over it judges whether a predetermined time is lapsed or not, the judgment is judged according to a count value which is obtained by an interior timer or the above stated processing 42a, etc..

A processing 42d is a branch processing in which it judges whether a predetermined signal pattern necessary for a next electric supply control processing is set or not.

A processing 42e is a processing for renewal and setting the predetermined signal pattern for necessary the next time electric supply processing, in the above stated processing 42d, when it judges that a predetermined signal pattern for necessary the next time electric supply processing is not set. The processing 42e is a processing for setting a preparation flag in which the renewal of the predetermined signal pattern is expressed. A processing 42f is a clear processing for the flag which is used as the judgment in which it judges whether the positioned signal pattern is a first time or not.

In a processing 42h, the pattern of the respective phase signal 9a which is read in by the processing 42b is collated with a predetermined signal pattern which is determined by the rotor position.

In a processing 42i, when the signal pattern is coincided it proceeds to the processing 42k but when the signal pattern is not coincided it jumps to the processing 42j.

The processing 42j carries out a processing in which the flag which is used in a case where when it judges whether the coincident signal pattern is coincided two times or not is cleared.

The processing 42k is a branch processing it judges whether the coincident signal pattern is coincided two times or not. A processing 421 is processing in which when the coincident flag is the "off" condition and the signal pattern is coincided, then the coincident flag is made to the "on" condition. A processing 42m is a branch processing in which it judges whether the predetermined signal pattern for necessary the next time electric supply control processing is set or not.

A processing 42n is a processing in which the predetermined signal pattern for necessary the next time electric supply control processing is renewed and set, in the above stated processing 42m, when it is judged that the predetermined signal pattern for necessary the next time electric supply control processing is not set. A processing 42o is a processing in which a preparation flag for expressing the renewal of the predetermined signal pattern is set and a processing 42p is a clear processing of the flag which is used when it is judged that the coincident signal pattern is the first time or not. In other words, after the predetermined signal pattern is renewed in the above stated processing 42e or the above stated processing 42n, when the signal pattern of the phase signal 9a which is read in the above stated processing 42b is coincided two times, at this rotation position a suitable electric supply pattern is determined and then the drive processing 43 is carried out.

Herein, since from the processing 42d to the processing 42g are of the same rank to from the processing 42n to the processing 42p, by forming a sub-routine, the increase in program number can be restrained at the minimum and at the same time when the return flow period after the electric supply change-over is long, the brushless motor 5 can be controlled effectively.

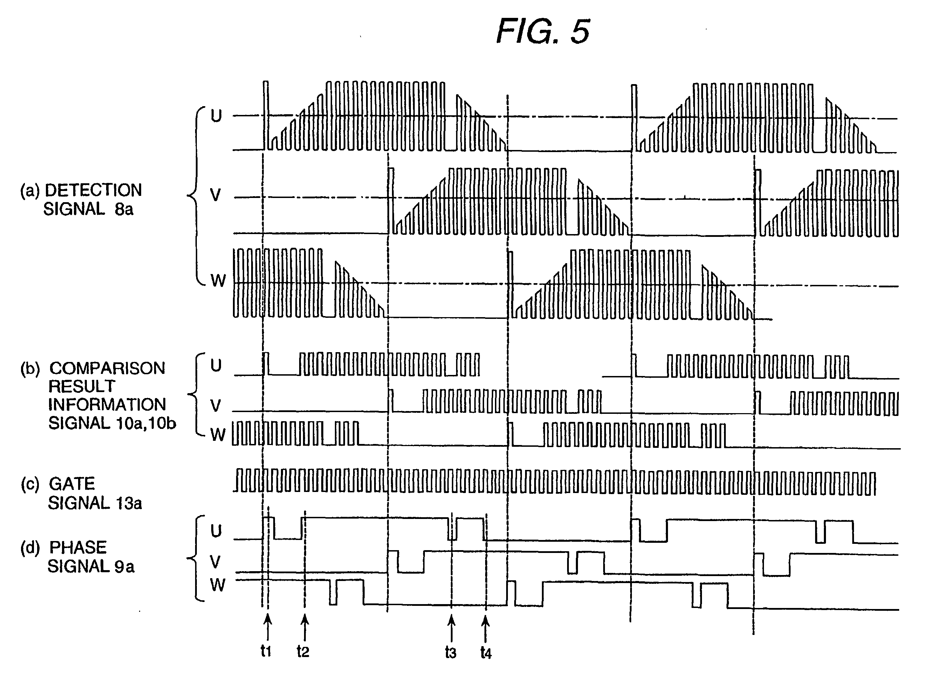

Fig. 5 shows the detection signal 8a of the terminal voltage of the respective phase (U, V, W phase) of the stator winding, PWM signal, the comparison result information signal of the respective phase which is outputted from the comparison circuit, the information signal pattern of PWM during the "on" condition which is read in the control circuit 6, and the position detection information which is recognized in the interior portion of the control circuit 6 of the brushless motor 5 in PWM control the conducation ratio of less than 100 %.

Referring to Fig. 5, in a case where the control processing using the algorithm shown in Fig. 4 is carried out, as shown in t1 and t3 shown in Fig. 5, immediately after the change-over of the electric supply pattern when the phase signal which is equal to t2 and t4 appears, the error judgment can be prevented and also without the affect of the return flow current which flows immediately after the change-over of the electric supply pattern a good phase signal can be obtained effectively, as a result the change-over of the electric supply can be carried out effectively.

Further, in the processing 42e and the processing 42n explained referring to Fig. 4, after the renewal of the signal pattern, as shown in (b) of Fig. 3, when the signal vibrates at the vicinity of the standard point, as shown in (c) of Fig. 3, the vibrated signal is outputted, from the above stated processing 41 it transfers to the periodic processing 42, the processing 42 is carried out with the timing shown in (d) of Fig. 3 and the processing 42b is carried out with the timing shown in (e) of Fig. 3, and the collation of the signal pattern is carried out in the processing 42h, according to the pattern coincidence in the processing 42i, it proceeds to the processing 42k. In this time, in during the present electric supply period, since there is the first time pattern coincidence and the coincidence flag is the "off" condition, it branches from the processing 42k to the processing 421. After that, the processing 42b is carried out again with the timing of td shown in (g) of Fig. 3, and after the this processing 42h is carried out, in the processing 42i since the signal pattern does not coincide it branches to the processing 42j, and the coincidence flag is cleared and it returns to processing 41.

Further, when it transfers from the above stated processing 41 to the periodic processing 42, the processing 42b is practiced at the timing of tc shown in (c) of Fig. 3, similar to the above, as far as the processing 421 is practiced. At the timing td shown in (c) of Fig. 3 the processing from the processing 42b to the processing 42k is practiced, since the coincidence flag is the "on" condition, through the processing 42m it proceeds to the processing 43, as a result the drive processing suited for the rotor position is carried out.

When the above stated phase signal generation circuit 9 and the above stated position detection algorithm are employed, even when the pulse shape noises enter, the rotor position can be detected properly, as a result it is possible to carry out the good motor control. Further, in this embodiment according to the present invention, as the condition for proceeding the drive processing, two times pattern coincidence of the phase signal 9a is employed, however it is effective to employ plural times coincidence except for two times and also it is effective to omit by restraining the noises and the vibration which appear to the terminal voltage of the stator winding of the brushless motor 5.

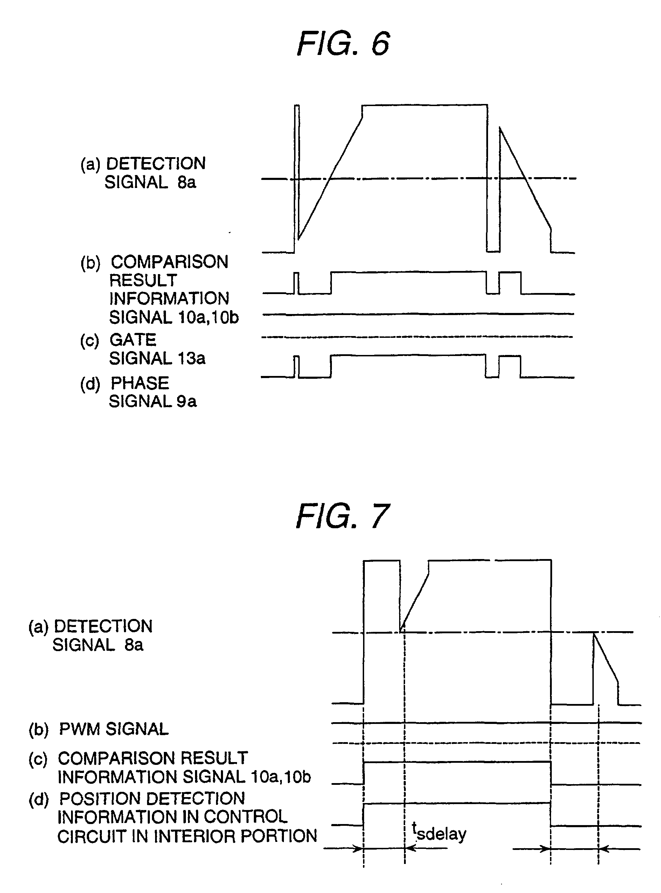

Fig. 6 shows one phase part of the detection voltage 8a of the terminal voltage of the stator winding of the brushless motor 5, the comparison result information signals 10a and 10b which are outputted from the comparison circuit 10, the gate signal 13a which is outputted from the gate signal preparation circuit 13 and the phase signal 9a which is outputted from the selection holding circuit 12, in PWM control the conduction ratio is 100 % or in PAM (Pulse Amplitude Modulation) control.

In a case where this phase signal generation circuit 9 is employed, when PWM signal is the "on" condition, the comparison result information signal 10b is reflected to the phase signal 9a as it is, and when PWM signal is the "off" condition, to hold the signal immediately before the "off" condition, in regardless whether the chopping operation in PWM control is carried out or not, the similar phase signal 9a can be obtained, as a result it is possible to carry out a good motor control in PAM control.

Further, in this embodiment according to the present invention, even in the construction in which the output voltage variable type rectifying circuit 2 is employed, since the standard voltage of the comparison circuit 10 is varied in response to the this time output voltage, PWM control and PAM control or the change-over control of PWM/PAM, the equal phase signal can be obtained and the good motor control can be realized.

Fig. 7 shows the detection voltage 8a of the terminal voltage of the stator winding of the brushless motor 5, the comparison result information signal which is outputted from the comparison circuit, and the one phase part of the position detection information in the interior portion of the control circuit 6, in PWM control the conduction ratio is 100 % or PAM control when the period in which return flow current flows after the electric supply change-over is long.

Since the processing 42e is provided to the judgment of the predetermined time laps after the electric supply change-over, when the period in which the return flow current flows after the electric supply change-over is long and the information signal does not vary at the vicinity of the standard point as shown in Fig. 6, the signal pattern is altered, accordingly the brushless motor 5 does not stop and the good motor control can be obtained.

And when the phase signal generation circuit 9 stated in above is used, since the "on" period and the "off" period of PWM signal are extracted from the voltage (the terminal voltage) which is applied actually to the stator winding of the brushless motor 5, it is unnecessary to carry out the operation for carrying out the timing adjustment and the correction from the outside portion, even the circuit constant etc. for determining the delay time varies, it is possible to generate the phase signal for carrying out the superior rotation position detection processing.

Incidentally, between PWM signal which is generated in the control circuit 6 and the voltage which is applied actually to the stator winding of the brushless motor 5, since the delay time generates due to the operation delay, when the in the control circuit 6 the rotor position detects accurately from the motor terminal voltage in response to PWM signal, it is necessary to carry out the timing adjustment between them.

As the control circuit 6 detects (judges) the rotor position in accordance with the pattern of the phase signal in response to the terminal voltage (the detection voltage) of the stator winding of the respective phase of the stator winding at some time (timing), it can be reduced the error detection due to the noises.

Further, in this control circuit 6 the next electric supply pattern is determined according to this rotor position and the present electric supply pattern to the stator winding, it can be reduced the error operation due to the noises.

In the rotation position detected according to the edge interruption processing shown in the conventional control apparatus, to avoid the error operation due to the spike voltage which is generated immediately after the commutation, it is necessary to provide the phase signal read-on inhabitation section. However, according to the present invention, it is unnecessary to provide such the phase signal read-on inhabitation section, by measuring the period of the spike voltage, since it can be assumed the time (the timing for vanishing the return flow current) in which the return flow voltage flows, by utilizing this to the phase control, as a result the wide control can be realized.

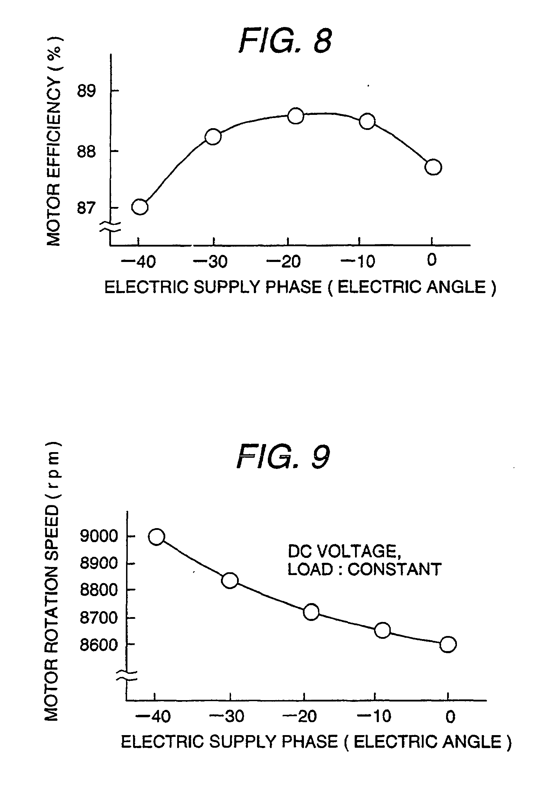

Since the operation efficiency of the brushless motor 5, as shown in Fig. 8, changes by the electric supply phase to the counter electromotive force, the electric supply phase is a very important factor. Accordingly, to effect the most high efficiency during the motor-starting, using the information which is stored RAM and ROM in advance, the electric supply phase is controlled, as a result the brushless motor 5 can be operated with the high efficiency.

Further, when the electric supply phase is controlled from the outside portion, at the user side the brushless motor 5 can be operated by the electric supply phase which is suited for the motor. The control terminals for the outside portion control can use A/D conversion terminal, a communication use terminal and an input port etc..

In the speed control in the brushless motor 5, in PWM control in which the terminal voltage which is supplied to the stator winding is controlled by the pulse wide control, when the conduction ratio reaches the maximum value (100 %), it can not carry out the control for heightening the rotation speed more than the maximum value. Further, in PAM control for carrying out the speed control by controlling the largeness of the terminal voltage which is supplied to the stator winding, when the terminal voltage reaches to the maximum value, it can not carry out the control for heightening the rotation speed more than the maximum value. However, as shown in Fig. 9, at a condition in which by maintaining at the same value the terminal voltage which is supplied to the stator winding, the electric supply phase is varied, accordingly the rotation speed can be varied. And, the control of the electric supply phase can be realized by employing the phase signal.

Accordingly, in addition to PWM control of the stator winding current of the brushless motor and/or PAM control, the electric supply phase is carried out, the rotation speed of the brushless motor can be controlled widely. For example, in PWM control when at the condition where the conducation ratio does not reach to the maximum value or at the condition where in PAM control when the supply voltage does not reach to the maximum value, the control under the electric supply phase in which the efficiency of the motor becomes to the maximum and after the conduction ratio or the supply voltage has reached to the maximum value, the control is carried out to proceed the electric supply phase from the maximum efficiency point, and in commonly it carries out the operation control characteristic as the efficiency importance, and at the condition where the high rotation is necessary, it can proceed the electric supply phase and the operation control characteristic having the high speed characteristic importance can be carried out.

In the above stated control apparatus, this control apparatus is constituted by the hybrid IC to which the control circuit 6 and the phase signal generation circuit 9 are united and the intelligent type power module to which the control circuit 6 and the phase signal generation circuit 9 are united, the component number can be reduced, as a result the control apparatus to be handled easily can be obtained.

In a heat pump system air conditioner, since a cooling and warming output is varied by the rotation speed of a compressor, as stated in above, in addition to PWM control and/or PAM control, by using the brushless motor which is controlled under the electric supply phase as the drive source of the above stated compressor and/or the blower, then the air conditioner having the high cooling and warming ability can be realized. Further, in the ordinary operation area, the operation control having the efficiency importance is carried out, as a result the energy saving type air conditioner can be attained.

Similarly to above, since the brushless motor controlled by using this control apparatus is used as the drive source of the compressor and/or the blower of a refrigerator, the refrigerator having the superior refrigeration ability can be realized.

Further, when the washing machine for rotating the agitator and the spinning basket is constituted as the power source as the brushless motor which is controlled using this control apparatus, similar to the washing machine having the superior control characteristic can be obtained. In particularly, it is effective to realize the energy saving and the high speed spinning.

In addition to the above, when the phase signal generation circuit according to the present invention, in addition to the above, since the use of the electrolyte capacitor having the large capacity becomes unnecessary, and since the apparatus has the function for holding the signal level, even the low cost microprocessor having the slow processing speed is used in the control apparatus, it is possible to carry out the position detection processing of the rotor of the brushless motor. Further, since the inverter control circuit and the drive circuit are formed integrally, the compact size and the low cost inverter control circuit can be realized. Since the air conditioner, the refrigerator and the washing machine on which the above stated control apparatus is mounted is constituted, the compact size, the low cost and the superior control characteristic air conditioner, the compact size, the low cost and the superior control characteristic refrigerator and the compact size, the low cost and the superior control characteristic washing machine can be realized.

According to the present invention, in the brushless motor the magnetic pole position detection accuracy of the rotor is high and an accurate control can be attained.

Further, the position detection error and the electric supply error operation due to the noises can be reduced, as a result the control range can be enlarged.

Further, since the brushless motor is operation controlled with the efficiency importance characteristic, or the operation control is carried out with the high speed importance characteristic, the brushless motor can be controlled at the large range.

Further, by employment of the brushless motor to be controlled by the above stated control apparatus as the power source, the air conditioner having the high performance, the refrigerator having the high performance and the washing machine having the high performance can be realized.

To sum up, one of the features according to the present invention, the phase signal generation circuit 9 is constituted using the comparison circuit 10, the delay circuit 11, the gate signal preparation circuit 13, and the selection signal holding circuit 12, and the phase signal generated by this phase signal generation circuit 9 is pattern recognized by the control circuit 6, the position of the rotor is detected, therefore PWM control whole area, PAM control, and the change-over PWM/PAM control can be carried out.

**Claims**

**1.** Control apparatus for a brushless motor (5) comprising:

- a voltage detection means (8) for generating a detection voltage (8a) in response to a terminal voltage of plural phases of a stator winding of the brushless motor (5),

- a standard voltage generation means for generating a standard voltage,
- a comparison means (10) for outputting a comparison result information signal (10a, 10b) by comparing the detection voltage (8a) and the standard voltage,
- a control means (6) for detecting a rotation position of a rotor of the brushless motor (5) and for generating a pulse width modulated electric supply signal (PWM SIGNAL) to the inverter circuit driver (7) in response to the rotation position, and
- an output means (4) for electric supplying to the stator winding according to the electric supply signal,

**characterized in that**

a gate signal preparation means (13) extracts a gate signal (13a) corresponding to on or off periods of the PWM electric supply signal from the comparison result information signal (10a); a select and hold means (12) outputs a phase signal (9a) based on the comparison result information signal (10b) and the gate signal (13a), wherein

- the comparison information signal (10b) is output as said phase signal (9a) as it is, when the gate signal (13a) is in an on condition and,
- an immediately before the off condition appearing comparison result information signal (10b) is output as said phase signal (9a) when the gate signal (13a) is in an off condition; and

the control means determines the rotation position of the rotor based on said phase signal (9a).

2. Control apparatus according to claim 1, comprising:

   - a rectifying circuit (2) for converting an alterning current (AC) power source voltage to a direct current (DC) voltage,
   - an inverter circuit (4) for converting said direct current (DC) voltage to an alternating current (AC) voltage and for supplying said alternating current (AC) voltage to the brushless motor (5), and
   - a control circuit (6) for controlling said inverter circuit (4).

3. Control apparatus according to claim 1 or 2, comprising:

   - a converter circuit having a rectifying circuit for converting an alterning current (AC) power source voltage to a direct current (DC) voltage and a chopper circuit for controlling a size of said direct current (DC) voltage,
   - an inverter circuit (4) for converting said direct current (DC) voltage which is received from said inverter circuit to an alternating current (AC) voltage and for supplying said alternating current (AC) voltage to the brushless motor (5),
   - a converter control circuit for controlling a switching operation of said inverter circuit (4),
   - an inverter control circuit for driving the brushless motor (5) by controlling a switching operation of said inverter circuit (4), and
   - a control circuit (6) for controlling said converter control circuit and said inverter control circuit (4).

4. Control apparatus according to any one of claims 1 to 3,
   wherein
   the control means detects the rotation position of the rotor according to a pattern of plural comparison result information signals (10a, 10b).

5. Control apparatus according to any one of claims 1 to 4,
   wherein
   the control means determines an electric supply pattern to the stator winding according to a pattern of plural comparison result information signals (10a, 10b).

6. Control apparatus according to any one of claims 1 to 5,
   wherein
   the control means (6) detects a period in which a return current flows after an electric supply change-over according to a pattern of the comparison result information signal (10a, 10b)

7. Control apparatus according to claims 1 to 6, wherein
   the control means detects the rotation position of the rotor according to a pattern of the phase signal (9a) and wherein, after a return current after an electric supply change-over vanishes, a processing for renewing a phase signal pattern, which is collated to carry out a position detection, is performed.

**8.** Control apparatus according to any one of claims 1 to 7,
wherein
the control means (6) detects the rotor position according to a pattern of the comparison result information signal (10a, 10b) and changes over an electric supply phase according to an electric supply information which is stored in a memory.

**9.** Control apparatus according to any one of claims 1 to 8,
wherein
the control means (6) detects the rotor position according to a pattern of the comparison result information signal (10a, 10b) and changes over an electric supply phase according to a phase control command from an outside portion.

**10.** Control apparatus according to claim 9, wherein
the control means uses an A/D conversion terminal, a communication use terminal or an input port as a terminal for inputting the phase control command from said outside portion.

**11.** Control apparatus according to any one of claims 1 to 10,
wherein
the control means (6) carries out a PWM phase control in an operation efficiency importance conrol area and carries out a control for proceeding an electric phase in a high rotation importance control area.

**12.** Control apparatus according to any one of claims 1 to 11,
wherein
the control means (6) is constituted by a microprocessor having plural input and output ports.

**13.** Control apparatus according to any one of claims 1 to 11,
wherein
the control means (6) is constituted by a hybrid IC having plural input and output ports.

**14.** Air conditioner having a compressor and/or a blower,
wherein
the brushless motor (5) constitutes a power force source and is operated and controlled by the control apparatus according to any one of claims 1 to 13.

**15.** Refrigerator having a compressor and/ or a blower,
wherein
the brushless motor (5) constitutes a power force source and is operated and controlled by the control apparatus according to any one of claims 1 to 13.

**16.** Washing machine having a compressor and/or a blower,
wherein
the brushless motor (5) forms a power force source and is operated and controlled by the control apparatus according to any one of claims 1 to 13.

**Patentansprüche**

**1.** Steuervorrichtung für einen bürstenlosen Motor (5) mit:

einer Spannungserfassungseinrichtung (8) zum Erzeugen einer Erfassungsspannung (8a) in Abhängigkeit von einer Anschlussspannung mit mehreren Phasen an einer Statorwicklung des bürstenlosen Motors (5),
einer Standardspannungsgeneratoreinrichtung zum Erzeugen einer Standardspannung,
einer Vergleichseinrichtung (10) zum Ausgeben eines Vergleichsergebnisinformationssignals (10a, 10b) nach Vergleich der Erfassungsspannung (8a) und der Standardspannung, einer Steuereinrichtung (6) zum Erfassen einer Winkelposition eines Rotors des bürstenlosen Motors (5) und zum Erzeugen eines pulsbreitenmodulierten elektrischen Versorgungssignals (PWM-Signal) für den Wechselrichtertreiber (7) in Abhängigkeit von der Winkelposition und
einer Ausgabeeinrichtung (4) für die elektrische Versorgung der Statorwicklung in Abhängigkeit von dem elektrischen Versorgungssignal,

**dadurch gekennzeichnet, dass**
eine Gate-Signalvorbereitungseinrichtung (13) ein Gate-Signal (13a), das Ein- und Aus-Intervallen des elektrischen PWM-Versorgungssignals entspricht, aus dem Vergleichsergebnisinformationssignal (10a) extrahiert,
ein Auswahlhalteglied (12) ein Phasensignal (9a) in Abhängigkeit von dem Vergleichsergebnisinformationssignal (10b) und dem Gate-Signal (13a) ausgibt, wobei
das Vergleichsergebnisinformationssignal (10b) als das Phasensignal (9a) unverändert ausgegeben wird, wenn sich das Gate-Signal (13a) in dem Ein-Zustand befindet, und
ein unmittelbar vor dem Aus-Zustand auftretendes Vergleichsergebnisinformationssignal (10b) als das Phasensignal (9a) ausgegeben wird, wenn sich das Gate-Signal (13a) in einem Aus-Zustand befindet, und
die Steuereinrichtung die Winkelposition des Rotors in Abhängigkeit von dem Phasensignal (9a) festlegt.

2. Steuervorrichtung nach Anspruch 1 mit:

einem Gleichrichterschaltkreis (2) zum Umwandeln einer Spannung einer Wechselstromquelle (AC) in eine Gleichspannung (DC),
einem Wechselrichterschaltkreis (4) zum Umwandeln der Gleichspannung (DC) in eine Wechselspannung (AC) und zum Anlegen der Wechselspannung (AC) an den bürstenlosen Motor (5) und
einem Steuerschaltkreis (6) zum Steuern des Wechselrichterschaltkreises (4).

3. Steuervorrichtung nach Anspruch 1 oder 2 mit:

einem Wandlerschaltkreis mit einem Gleichrichterschaltkreis zum Umwandeln der Spannung einer Wechselstromquelle (AC) in eine Gleichspannung (DC) und einem Chopper-Schaltkreis zum Steuern der Größe der Gleichspannung (DC),
einem Wechselrichterschaltkreis (4) zum Umwandeln der Gleichspannung (DC), die von dem Wechselrichterschaltkreis kommt, in eine Wechselspannung (AC) und zum Anlegen der Wechselspannung (AC) an den bürstenlosen Motor (5),
einem Wandlersteuerschaltkreis zum Steuern der Schaltoperation des Wechselrichterschaltkreises (4),
einem Wechselrichtersteuerschaltkreis für das Treiben des bürstenlosen Motors (5) durch Steuern der Schaltoperation des Wechselrichterschaltkreises (4) und
einem Steuerschaltkreis (6) zum Steuern des Wandlersteuerschaltkreises und des Wechselrichterschaltkreises (4).

4. Steuervorrichtung nach einem der Ansprüche 1 bis 3, bei der die Steuereinrichtung die Winkelposition des Rotors in Abhängigkeit von einem Muster von mehreren Vergleichsergebnisinformationssignalen (10a, 10b) erfasst.

5. Steuervorrichtung nach einem der Ansprüche 1 bis 4, bei der die Steuereinrichtung ein Muster für die elektrische Versorgung der Statorwicklung in Abhängigkeit von einem Muster von mehreren Vergleichsergebnisinformationssignalen (10a, 10b) festlegt.

6. Steuervorrichtung nach einem der Ansprüche 1 bis 5, bei der die Steuereinrichtung (6) ein Intervall erfasst, in dem nach einem elektrischen Versorgungswechsel in Abhängigkeit von einem Muster des Vergleichsergebnisinformationssignals (10a, 10b) ein Umkehrstrom fließt.

7. Steuervorrichtung nach Anspruch 1 bis 6, bei der die Steuereinrichtung die Winkelposition des Rotors in Abhängigkeit von einem Muster des Phasensignals (9a) erfasst und bei der nach einem Umkehrstrom, der nach einem elektrischen Versorgungswechsel abklingt, eine Verarbeitung für die Erneuerung eines Phasensignalmusters durchgeführt wird, das erzeugt worden ist, um eine Positionserfassung auszuführen.

8. Steuervorrichtung nach einem der Ansprüche 1 bis 7, bei der die Steuereinrichtung (6) die Rotorposition in Abhängigkeit von einem Muster des Vergleichsergebnisinformationssignals (10a, 10b) erfasst und eine elektrische Versorgungsphase in Abhängigkeit von einer elektrischen Versorgungsinformation, die in einem Speicher abgelegt ist, wechselt.

9.   Steuervorrichtung nach einem der Ansprüche 1 bis 8, bei der die Steuereinrichtung (6) die Rotorposition in Abhängigkeit von einem Muster des Vergleichsergebnisinformationssignals (10a, 10b) erfasst und eine elektrische Versorgungsphase in Abhängigkeit von einem Phasensteuerbefehl von einer externen Einheit wechselt.

10.   Steuervorrichtung nach Anspruch 9, bei der die Steuereinrichtung auf einen A/D-Wandleranschluss, einen Kommunikationsanschluss oder einen Eingangsport als Anschluss für die Eingabe des Phasensteuerbefehls von der externen Einheit zurückgreift.

11.   Steuervorrichtung nach einem der Ansprüche 1 bis 10, bei der die Steuereinrichtung (6) eine PWM-Phasensteuerung in einem Operationseffizienzsteuerbereich durchführt und eine Steuerung für das Vorschieben einer elektrischen Phase in einem Hochdrehzahlsteuerbereich durchführt.

12.   Steuervorrichtung nach einem der Ansprüche 1 bis 11, bei der die Steuereinrichtung (6) aus einem Mikroprozessor mit mehreren Eingangs- und Ausgangsports besteht.

13.   Steuervorrichtung nach einem der Ansprüche 1 bis 11, bei der die Steuereinrichtung (6) aus einem Hybrid-IC mit mehreren Eingangs- und Ausgangsports besteht.

14.   Klimaanlage mit einem Kompressor und/oder einem Gebläse, bei der der bürstenlose Motor (5) eine Kraftquelle darstellt und betrieben und gesteuert wird durch die Steuervorrichtung nach einem der Ansprüche 1 bis 13.

15.   Kühlvorrichtung mit einem Kompressor und/oder einem Gebläse, bei der der bürstenlose Motor (5) eine Kraftquelle darstellt und betrieben und gesteuert wird durch die Steuervorrichtung nach einem der Ansprüche 1 bis 13.

16.   Waschmaschine mit einem Kompressor und/oder Gebläse, bei der der bürstenlose Motor (5) eine Kraftquelle bildet und betrieben und gesteuert wird durch die Steuervorrichtung nach einem der Ansprüche 1 bis 13.


**Revendications**

1.   Dispositif de commande pour un moteur sans balai (5) comportant :

-   des moyens de détection de tension (8) pour générer une tension de détection (8a) en réponse à une tension de borne d'une pluralité de phases d'un bobinage statorique du moteur sans balai (5),
-   des moyens de génération de tension standard pour générer une tension standard,
-   des moyens de comparaison (10) pour délivrer en sortie un signal d'informations de résultat de comparaison (10a, 10b) en comparant la tension de détection (8a) à la tension standard,
-   des moyens de commande (6) pour détecter une position de rotation d'un rotor du moteur sans balai (5) et pour générer un signal d'alimentation électrique modulé en largeur d'impulsions ( SIGNAL PWM) dans l' attaqueur de circuit onduleur (7) en réponse à la position de rotation, et
-   des moyens de sortie (4) pour délivrer de l'électricité au bobinage statorique conformément au signal d'alimentation électrique,

   **caractérisé en ce que**
   des moyens de préparation de signal de grille (13) extraient un signal de grille (13a) correspondant à des périodes passantes ou bloquées du signal d'alimentation électrique PWM à partir du signal d'informations de résultat de comparaison (10a),
   des moyens de sélection et de conservation (12) délivrent en sortie un signal de phase (9a) sur la base du signal d'informations de résultat de comparaison (10b) et du signal de grille (13a), dans lequel

-   le signal d'informations de comparaison (10b) est délivré en sortie sous la forme dudit signal de phase (9a) tel quel, lorsque le signal de grille (13a) est dans un état passant et,
-   un signal d'informations de résultat de comparaison apparaissant immédiatement avant l'état bloqué (10b) est délivré en sortie sous la forme dudit signal de phase (9a) lorsque le signal de grille (13a) est dans un état bloqué, et

   les moyens de commande déterminent la position de rotation du rotor sur la base dudit signal de phase (9a) .

EP 0 945 974 B1

2. Dispositif de commande selon la revendication 1, comportant :

- un circuit redresseur (2) pour convertir une tension source alternative en une tension continue,
- un circuit onduleur (4) pour convertir ladite tension continue en une tension alternative et pour délivrer ladite tension alternative au moteur sans balai (5), et
- un circuit de commande (6) pour commander ledit circuit onduleur (4).

3. Dispositif de commande selon la revendication 1 ou 2, comportant :

- un circuit convertisseur ayant un circuit redresseur pour convertir une tension source alternative en une tension continue et un circuit hacheur pour commander une taille de ladite tension continue,
- un circuit onduleur (4) pour convertir ladite tension continue qui est reçue par ledit circuit onduleur en une tension alternative et pour délivrer ladite tension alternative au moteur sans balai (5),
- un circuit de commande de convertisseur pour commander une opération de commutation dudit circuit onduleur (4),
- un circuit de commande d'onduleur pour entraîner le moteur sans balai (5) en commandant une opération de commutation dudit circuit onduleur (4), et
- un circuit de commande (6) pour commander ledit circuit de commande de convertisseur et ledit circuit de commande d'onduleur (4).

4. Dispositif de commande selon l'une quelconque des revendications 1 à 3, dans lequel
les moyens de commande détectent la position de rotation du rotor conformément à un motif d'une pluralité de signaux d'informations de résultat de comparaison (10a, 10b).

5. Dispositif de commande selon l'une quelconque des revendications 1 à 4, dans lequel
les moyens de commande déterminent un motif d'alimentation électrique dans le bobinage statorique conformément à un motif d'une pluralité de signaux d'informations de résultat de comparaison (10a, 10b).

6. Dispositif de commande selon l'une quelconque des revendications 1 à 5, dans lequel
les moyens de commande (6) détectent une période au cours de laquelle un courant réfléchi circule après une inversion d'alimentation électrique conformément à un motif du signal d'informations de résultat de comparaison (10a, 10b).

7. Dispositif de commande selon les revendications 1 à 6, dans lequel
les moyens de commande détectent la position de rotation du rotor conformément à un motif du signal de phase (9a) et dans lequel, une fois qu'un courant réfléchi après une inversion d'alimentation électrique a disparu, on effectue un traitement pour renouveler un motif de signal de phase, qui est recueilli pour exécuter une détection de position.

8. Dispositif de commande selon l'une quelconque des revendications 1 à 7, dans lequel
les moyens de commande (6) détectent la position du rotor conformément à un motif du signal d'informations de résultat de comparaison (10a, 10b) et inversent une phase d'alimentation électrique conformément à des informations d'alimentation électrique qui sont mémorisées dans une mémoire.

9. Dispositif de commande selon l'une quelconque des revendications 1 à 8, dans lequel
les moyens de commande (6) détectent la position du rotor conformément à un motif du signal d'informations de résultat de comparaison (10a, 10b) et inversent une phase d'alimentation électrique conformément à une instruction de commande de phase provenant d'une partie extérieure.

10. Dispositif de commande selon la revendication 9, dans lequel
les moyens de commande utilisent une borne de conversion A/N, une borne d'utilisation de communication ou un port d'entrée en tant que borne pour entrer l'instruction de commande de phase provenant de ladite partie extérieure.

11. Dispositif de commande selon l'une quelconque des revendications 1 à 10, dans lequel
les moyens de commande (6) exécutent une commande de phase PWM dans une zone de commande d'importance d'efficacité opérationnelle et exécutent une commande pour passer à une phase électrique dans une zone de commande d'importance de rotation élevée.

13

**12.** Dispositif de commande selon l'une quelconque des revendications 1 à 11, dans lequel
les moyens de commande (6) sont constitués d'un microprocesseur ayant une pluralité de ports d'entrée et de sortie.

**13.** Dispositif de commande selon l'une quelconque des revendications 1 à 11, dans lequel
les moyens de commande (6) sont constitués d'un circuit intégré hybride ayant une pluralité de ports d'entrée et de sortie.

**14.** Climatiseur ayant un compresseur et/ou un ventilateur, dans lequel
le moteur sans balai (5) constitue une source de force de puissance et est actionné et commandé par le dispositif de commande selon l'une quelconque des revendications 1 à 13.

**15.** Réfrigérateur ayant un compresseur et/ou un ventilateur, dans lequel
le moteur sans balai (5) constitue une source de force de puissance et est actionné et commandé par le dispositif de commande selon l'une quelconque des revendications 1 à 13.

**16.** Lave-linge ayant un compresseur et/ou un ventilateur, dans lequel
le moteur sans balai (5) forme une source de force de puissance et est actionné et commandé par le dispositif de commande selon l'une quelconque des revendications 1 à 13.

## FIG. 1

BRUSHLESS MOTOR

TERMINAL VOLTAGE DETECTOR

8a DETECTION VOLTAGE

DETECTION VOLTAGE

PHASE SIGNAL GENERATION CIRCUIT 9

COMPARISON CIRCUIT 10

GATE SIGNAL PREPARATION CIRCUIT 13

DELAY CIRCUIT 11

SELECTION HOLDING CIRCUIT 12

10a

10b

11a

13a

INVERTER CIRCUIT 4

SMOOTHING CIRCUIT 3

RECTIFYING CIRCUIT 2

AC POWER SOURCE 1

DRIVER 7

DRIVE SIGNAL

PWM SIGNAL

CONTROL CIRCUIT 6

DC VOLTAGE VALUE

9a PHASE SIGNAL

SPEED COMMAND SIGNAL SV

M 5

8

FIG. 2A

FIG. 2B

FIG. 2C

# FIG. 3

(a) PWM SIGNAL

(b) DETECTION
  SIGNAL 8a

tdON  tdOFF

(c) COMARISON
  RESULT INFORMATION
  SIGNAL 10a,10b

(d) GATE SIGNAL 13a

(e) PHASE SIGNAL 9a

ta tb  tctd

# FIG. 4

41 — ( MAIN PROCESSING )

42

COUNT PROCESSING — 42a

42b — PHASE SIGNAL READ-IN PROCESSING

PREDETERMINED TIME LAPS ? — 42c — YES

NO

PREPARATION FLAG : 1 ? — 42d — NO

YES

SIGNAL PATTERN RENEWAL — 42e

PREPARATION FLAG = 1 — 42f

CONCIDENCE FLAG OFF — 42g

42h — SIGNAL PATTERN COLLATION PROCESSING

SIGNAL PATTERN COINCIDENCE — 42i — NO — CONCIDENCE FLAG OFF — 42j

YES

CONCIDENCE FLAG ON ? — 42k — NO — CONCIDENCE FLAG ON — 42l

YES

PREPARATION FLAG : 1 ? — 42m — NO — SIGNAL PATTERN RENEWAL — 42n

YES

PREPARATION FLAG = 1 — 42o

CONCIDENCE FLAG OFF — 42p

43 — ( DRIVE PROCESSING )

44 — PREPARATION FLAG = 0

45 — CONCIDENCE FLAG OFF

# FIG. 5

(a) DETECTION
SIGNAL 8a

U

V

W

(b) COMPARISON
RESULT
INFORMATION
SIGNAL 10a,10b

U

V

W

(c) GATE
SIGNAL 13a

(d) PHASE
SIGNAL 9a

U

V

W

t1  t2      t3  t4

EP 0 945 974 B1

## FIG. 6

(a) DETECTION
    SIGNAL  8a

(b) COMPARISON
    RESULT
    INFORMATION
    SIGNAL 10a,10b

(c) GATE
    SIGNAL 13a

(d) PHASE
    SIGNAL 9a

## FIG. 7

(a) DETECTION
    SIGNAL  8a

(b) PWM SIGNAL

(c) COMPARISON RESULT
    INFORMATION SIGNAL 10a,10b

(d) POSITION DETECTION
    INFORMATION IN CONTROL
    CIRCUIT IN INTERIOR PORTION

$t_{sdelay}$

*FIG. 8*

*FIG. 9*